# EUROPEAN PATENT SPECIFICATION

(11) **EP 1 862 932 B1**
(45) Date of publication and mention of the grant of the patent: **09.12.2015**
(21) Application number: 06011470.9
(22) Date of filing: 02.06.2006
(51) Int. Cl.: G06F 21/33, G06F 21/62

(54) **Managing information in XML document management architecture**
Informationsverwaltung in einer Verwaltungsarchitektur für XML-Dokumente
Gestion d'informations dans une architecture de gestion de documents XML

(43) Date of publication of application: 05.12.2007
(73) Proprietor: Tieto Oyj, 00440 Helsinki (FI)
(72) Inventor: Majuri, Juha, 00250 Helsinki (FI)
(74) Representative: Papula Oy

(56) References cited:
- US-A1- 2003 023 623
- "XML Document Management (XDM) Specification, Candidate Version 1.0" 22 November 2005 (2005-11-22), OPEN MOBILE ALLIANCE LTD. , XP002421985 Retrieved from the Internet: URL:http://www.openmobilealliance.org/rele ase_program/docs/XDM/V1_0-20051122-C/OMA-T S-XDM_Core-V1_0-20051122-C.pdf> chapters 4 and 6.6.2 * the whole document *

## Description

### FIELD OF THE INVENTION

The present invention relates to the OMA (Open Mobile Alliance) XML (Extensible Markup Language) Document Management (XDM). Particularly, the invention relates to a novel and improved method, computer program and shared network element for managing information in an XML document management architecture.

### BACKGROUND OF THE INVENTION

The OMA (Open Mobile Alliance) XML (Extensible Markup Language) Document Management (XDM) defines a common mechanism that makes user-specific service-related information accessible to the service enablers that need them. Such information is expected to be stored in the network where it can be located, accessed and manipulated (created, changed, deleted, etc.). XDM specifies how such information will be defined in well-structured XML documents, as well as the common protocol for access and manipulation of such XML documents. The XML Configuration Access Protocol (XCAP), as defined by IETF (Internet Engineering Task Force), has been chosen as the common XML document.

The current XDM Specification (OMA-TS-XDM_Core-V1_0-20051122-C) defines two main features:
- The common protocol, XML Configuration Access Protocol (XCAP), by which principals can store and manipulate their service-related data, stored in a network as XML documents.
- The SIP (Session Initiation Protocol) subscription/notification mechanism by which principals can be notified of changes to such documents.

Documents accessed and manipulated via XCAP are stored in logical repositories in the network, called XML Document Management Servers (XDMS). Each repository may be associated with a functional entity which uses its data to perform its functions. For example, a POC (Push to talk Over Cellular) server accesses a POC XDMS to obtain a particular type of user document, a POC Group document, which provides the member list for a POC group session, and uses this information to invite such members for a POC session.

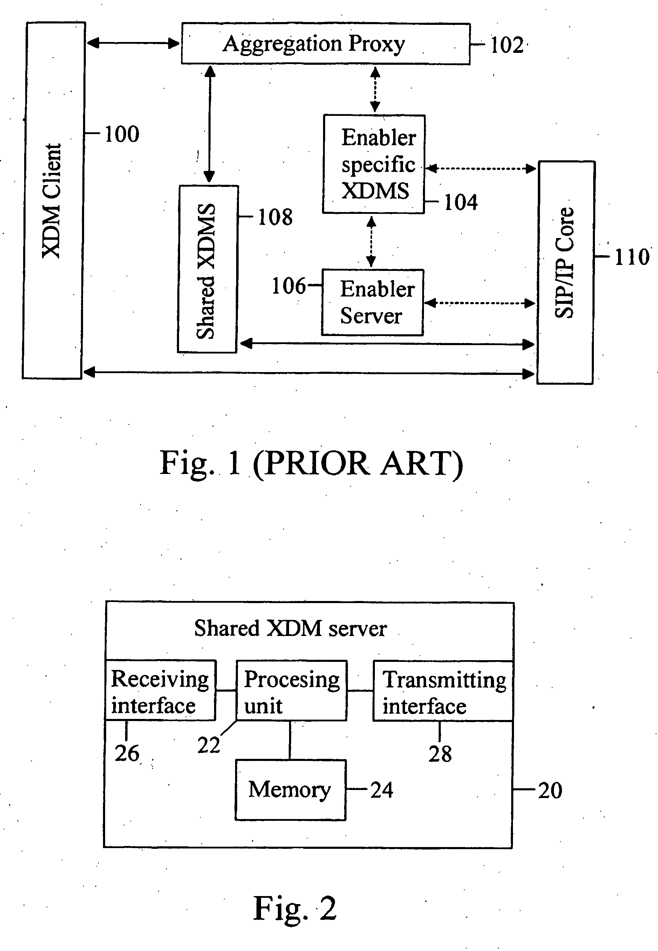

Figure 1 discloses a prior art XML document management architecture. An XML Document Management client (XDMC) 100 is a client entity that provides access to the various XDMS features. The XDMC 100 can be implemented in both terminal and server entities. An aggregation proxy (AP) 102 is the contact point for the XDM client 100 implemented in user equipment (UE) to access XML documents stored in any XDMS. The Aggregation Proxy performs the following functions:
- Performs authentication of the XDM client.
- Routes individual XCAP requests to the correct XDMS.
- Optionally supports charging.
- Optionally performs compression/decompression over the radio interface.

A Shared XML Document Management Server (XDMS) 108 is a server entity storing and managing a generic list of URIs (Uniform Resource Identifier) that can be used by different enablers to address all list members at once.

An Enabler specific XML Document Management Server (XDMS) 104 is an XCAP server that supports the following functions:
- Performs authorization of incoming SIP and XCAP requests
- Manages XML documents, which are specific to the service enabler.
- Provides aggregation of notifications of changes to multiple documents stored on the enabler specific XDMS.
- Notifies subscribers of changes to the enabler specific documents stored in the network.

An enabler specific server 106 refers e.g. to a PoC or presence service, i.e. to the application itself. The enabler specific server 106 is further connected to a corresponding XDM server, e.g. to a PoC XDMS or to a PS XDMS.

The SIP/IP Core 110 is a network of servers, such as proxies and/or registrars that perform a variety of services in support of the XDM service, such as routing, authentication, compression, etc. The specific features offered by different types of SIP/IP Core networks will depend on the particulars of those networks.

At present the OMA XML Document Management specifications do not define a solution with which to share contact lists between different users. Such contact lists should be accessible with multiple types of clients, e.g. application servers, portals and mobile clients.

Based on the above there is an obvious need for a solution that would mitigate and/or alleviate the above drawbacks.

### SUMMARY OF THE INVENTION

According to one aspect of the invention, there is provided a method for managing information in an extensible markup language (XML) document management architecture. The method comprises providing authorization rules with an application unique identifier, wherein the authorization rules determine access rights to at least one user-specific XML document. The method further comprises storing the authorization rules in a shared extensible markup language document management server as one or more extensible markup language documents so that the authorization rules can be accessed and/or modified via the extensible markup language configuration access protocol.

In one embodiment of the invention, the method further comprises receiving a request to access a user-specific extensible markup language document, determining, based on the application unique identifier and user information, whether an access may be granted to the user-specific extensible markup language document, and providing a response to the request.

In one embodiment of the invention, the user-specific XML document comprises a contact list.

According to another aspect of the invention, there is provided a computer program for managing information in an extensible markup language document management architecture. The computer program comprises code adapted to perform the method steps of the invention when executed on a data-processing device. In one embodiment, the computer program is embodied on a computer-readable medium.

According to another aspect of the invention, there is provided a shared extensible markup language document management server for managing information in an extensible markup language document management architecture. The shared extensible markup language document management server comprises at least one memory configured to store authorization rules that determine access rights to at least one user-specific extensible markup language document, the authorization rules being identified by an application unique identifier and stored as one or more extensible markup language documents. The shared extensible markup language document management server further comprises a processing unit configured to enable the authorization rules to be accessed and/or modified via the extensible markup language configuration access protocol (XCAP).

In one embodiment of the invention, the shared network element further comprises a receiving interface configured to receive a request to access a user-specific extensible markup language document; the processing unit configured to determine, based on the application unique identifier and user information, whether an access may be granted to the user-specific extensible markup language document, and a transmitting interface configured to provide a response to the request.

In one embodiment of the invention, the at least one user-specific extensible markup language document comprises a contact list.

The invention has a significant advantage over the prior art. Due to the invention, it is possible to share files, e.g. contact lists that are accessible with multiple types of clients, e.g. application servers, portals and mobile clients.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** discloses a prior art XML document management (XDM) architecture,
**Figure 2** illustrates an embodiment of a shared network element according to the invention,
**Figure 3** illustrates an embodiment to access information stored in a shared network element according to the invention,
**Figure 4** illustrates an embodiment of a logical view of the directory structure of a shared XML Document Management Server (XDMS) according to the invention, and
**Figure 5** illustrates an embodiment to manage information in a shared XML Document Management Server (XDMS) according to the invention.

### DETAILED DESCRIPTION OF THE INVENTION

Reference will now be made in detail to the embodiments of the present invention, examples of which are illustrated in the accompanying drawings.

Figure 2 discloses one embodiment of a shared network element according to the invention. In this example the shared network element is a shared XML document management server 20 of the Open Mobile Alliance (OMA) architecture. In order to enable a shared XML document, e.g. a contact list to be accessible with multiple types of clients, e.g. application servers, portals and mobile clients, authorization rules for the contact lists have been assigned an application unique identifier (AUID). The AUID unambiguously identifies the authorization rules. The AUID and the authorization rules have been stored in a memory 24. In one embodiment, the authorization rules are stored as one or more XML documents.

The shared XDM server 20 further comprises a processing unit 22 that is configured to process a request received via the receiving interface 26 according to instructions provided by an application stored in the memory. In another embodiment of Figure 2, the shared XDM server 20 may comprise several memories, wherein the application is stored in one memory and the authorization rules in another memory or memories. The receiving interface 26 may be implemented with software, hardware or with a combination of them. The shared XDM server 20 further comprises a transmitting interface 28 configured to provide a response to the request. The transmitting interface 28 may be implemented with software, hardware or with a combination of them.

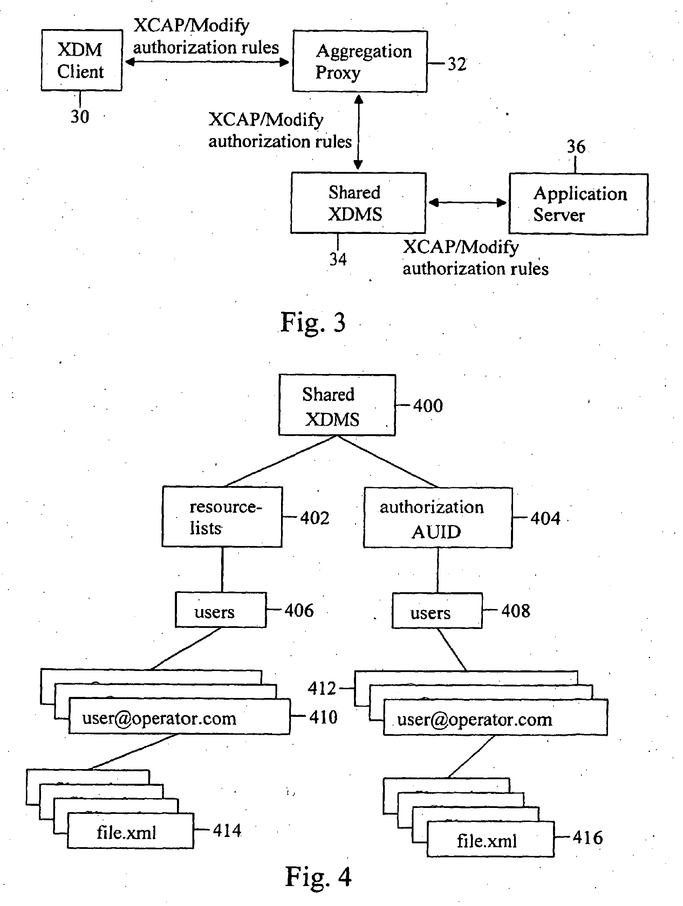

Figure 3 illustrates an embodiment to access information stored in a shared network element according to the invention.

The system disclosed in Figure 3 comprises an XML document management client 30, an aggregation proxy 32, a shared XML document management server 34 and an application server 36.

The aggregation proxy (AP) 32 is the contact point for the XML document management client 30 implemented in user equipment (UE) to access XML documents stored in an XML document management server (XDMS). The aggregation proxy 32 performs e.g. the following functions:
- Performs authentication of the XML document management client 30.
- Routes individual XML Configuration Access Protocol (XCAP) requests to the correct XDMS based on an application unique identifier (AUID) .
- Optionally supports charging.
- Optionally performs compression/decompression over the radio interface.

As disclosed earlier, in order to enable a shared XML document, e.g. a contact list to be accessible with multiple types of clients, e.g. application servers, portals and mobile clients, authorization rules for the shared XML documents, e.g. contact lists, have been assigned an application unique identifier (AUID). In one embodiment, the authorization rules are stored in the shared XML document management server 34. By using the authorization rules AUID, the XML document management client 30 and the application server 36 is able to access the authorization rules stored in the shared XML document management server 34.

Figure 3 discloses two separate ways to access the authorization rules. The XML document management client 30 may access the authorization rules via the aggregation proxy 32 by using the XML Configuration Access Protocol (XCAP). If the application server 36 is located at the same network as the shared XML document management server 34, it is able to access the shared XML document management server 34 directly by using the XCAP. In other words, the aggregation proxy 32 will not be needed.

Figure 4 discloses an embodiment of a logical view of the directory structure of a shared XML Document Management Server (XDMS) 400. In this example, the shared XDMS 400 services two different application unique identifiers (AUID). An XDM client may send to an aggregation proxy a request comprising e.g the following Uniform Resource Identifier (URI): http://addressofserver.com/resource-lists/me@example.com/friends.xml. The aggregation proxy forwards the request to the right XDMS based on the AUID (which in this case is "resource-lists" or "authorization rules"). When the XDMS receives the request, the AUID is again used to determine routing within the XDMS.

Figure 4 discloses two different AUIDs that are serviced by the same shared XDMS 400: a resource-lists AUID 402 and an authorization AUID 404. Under the resource-lists AUID 402 is arranged one or more users 406, 410. Each use has an own directory 406, 408 that comprises user-specific documents 414, 416, e.g. different contact lists (e.g. friends, relatives etc.) The structure relating to the authorization AUID 404 is in this example the same as in the resource-lists AUID 402. Under the authorization AUID 404 is arranged one or more users 408, 412. Each user may have one or more XML files 416 corresponding to the XML files 414 that give certain authorization rules 416 for each XML file 414. In one embodiment, one XML file 416 (comprising authorization rules) under the authorization rules AUID 404. corresponds to one XML file 414 under the resource-lists AUID 402. In another embodiment, a single XML file 416 (comprising authorization rules) under the authorization rules AUID 404 may correspond to several XML files 414 under the resource-lists AUID 402. In other words, a single file may determine authorization rules for several XML files under resource-lists AUID 402.

In practice, the authorization rules 416 may define access rights to access and/or modify a shared XML document, e.g. a contact list. For example, the authorization rules 416 may determine whether a user has any rights to a contact list, to read the contact list or to read and also modify the contact list.

Modification of authorization rules refers e.g. to one or more of the following steps:
- Give a user a right to access a certain document or part of the document.
- Remove a right to access a certain document or part of the document from a user.
- Modify existing rights of a user to a certain document or part of the document.

The authorization rules may also determine who is allowed to make changes to the authorization rules. The actual form of the authorization rules may take any applicable XML document form.

A man skilled in art understands that the logical view of the directory structure of the shared XDMS 400 in Figure is only one possible structure. Any other appropriate structure is also possible.

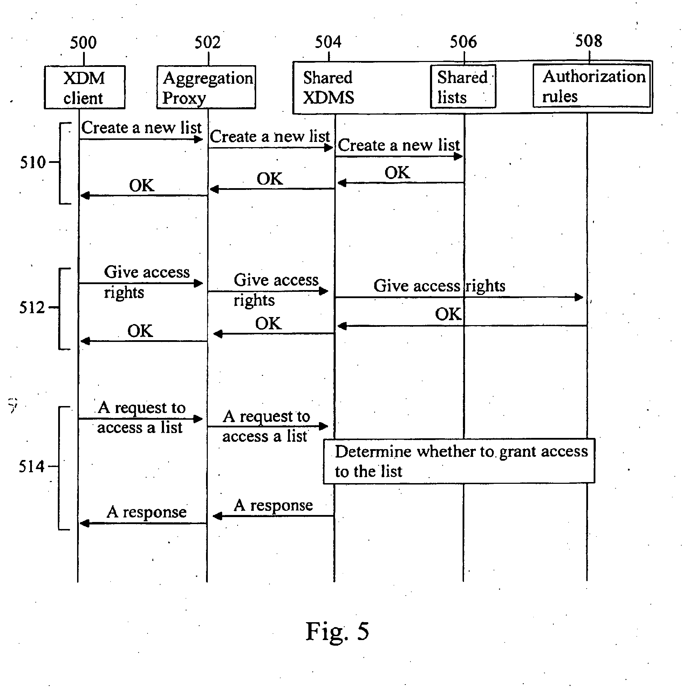

Figure 5 illustrates an embodiment to manage information in a shared XML Document Management Server (XDMS) according to the invention. The system structure is similar to the one in Figure 3. The system of Figure 5 comprises an XDM client 500, an aggregation proxy 502 and a shared XML document management server (XDMS) 504. The shared XDMS 504 comprises the AUID structures disclosed in Figure 4: shared lists 506 and authorization rules 508. Figure 5 presents three different use cases to manage information in the shared XDMS 504.

In the first use case 510, the XDM client creates a new list (e.g. a contact list) in the shared XDMS 504. In the second use case 512, the same XDM client 500 gives access rights to other users or parties to the created new list. The access rights are stored as authorization rules 508 in the shared XDMS 504. In one embodiment of the invention, the authorization rules are stored in at least one XML file, as disclosed in the description relating to Figure 4.

The third use case 514 assumes that a request to access the list created in use case 512 comes from a different XDM client than that originally created the list. The aggregation proxy 502 forwards the request to a right XDMS based on an application unique identifier (AUID) present in the request. In this case, the AUID points to the shared XDMS 504. The request comprises user information of the requesting party. Based on the user information and the authorization rules 508, the shared XDMS 504 determines whether the user has a right to access the requested list. In one embodiment, the shared XDMS 504 determines whether the document is owned by the entity making the request. After that the shared XDMS 504 determines whether there exist any authorization rules for the document. If there exist, the shared XDMS 504 determines whether the entity making the request has a right to access (read/write) the whole document or part of the document. The entity may also be given a notification (e.g. a HTTP notification, e.g. "HTTP 404 Not Found") whether the requested operation was successful.

In one embodiment, the user does not have any access rights to the list. In another embodiment, the user has a right to access a predetermined part of the list. In another embodiment, the user has a right to access to the list in its entirety.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A method for managing information in an extensible markup language, XML, document management architecture, **characterised in that** the method comprises:
providing authorization rules (416, 508) with an application unique identifier (404), the application unique identifier being a unique identifier within the namespace of Application Unique IDs that differentiates XCAP Resources accessed by one application from XCAP Resources accessed by another wherein the authorization rules (416, 508) determine access rights to at least one user-specific extensible markup language document; and
storing the authorization rules (416, 508) in a shared extensible markup language document management server (20, 400, 504) as one or more extensible markup language documents so that the authorization rules (416, 508) can be accessed and/or modified via the extensible markup language configuration access protocol, XCAP.

2. The method according to claim 1, further comprising:
receiving a request to access a user-specific extensible markup language document;
determining, based on the application unique identifier (404) and user information, whether an access may be granted to the user-specific XML document; and
providing a response to the request.

3. The method according to claim 1, wherein the user-specific extensible markup language document comprises a contact list.

4. A computer program for managing information in an extensible markup language, XML, document management architecture, **characterised in that** the computer program comprises code adapted to perform the method steps of any of claims 1 - 3 when executed on a data-processing device.

5. The computer program according to claim 4, wherein the computer program is embodied on a computer-readable medium.

6. A shared extensible markup language, XML, document management server for managing information in an extensible markup language document management architecture, **characterised in that** the shared extensible markup language document management server (20, 400, 504) comprises:
at least one memory (24) configured to store authorization rules (416, 508) that determine access rights to at least one user-specific extensible markup language document, the authorization rules (416, 508) being identified by an application unique identifier (404), the application unique identifier being a unique identifier within the namespace of Application Unique IDs that differentiates XCAP Resources accessed by one application from XCAP Resources accessed by another and stored as one or more extensible markup language documents; and
a processing unit (22) configured to enable the authorization rules (416, 508) to be accessed and/or modified via the extensible markup language configuration access protocol, XCAP.

7. The shared network element according to claim 6, further comprising:
a receiving interface (26) configured to receive a request to access a user-specific extensible markup language document;
the processing unit (22) configured to determine, based on the application unique identifier (404) and user information, whether an access may be granted to the user-specific extensible markup language document; and
a transmitting interface (28) configured to provide a response to the request.

8. The shared network element according to claim 6, wherein the at least one user-specific extensible markup language document comprises a contact list.

## Patentansprüche

1. Verfahren zum Verwalten von Informationen in einer Verwaltungsarchitektur für XML-Dokumente (Extensible Markup Language) **dadurch gekennzeichnet, dass** das Verfahren umfasst:
Bereitstellen von Autorisierungsregeln (416, 508) mit einem eindeutigen Anwendungsidentifikator (404), wobei der eindeutige Anwendungsidentifikator ein eindeutiger Identifikator in dem Namensraum von eindeutigen Anwendungsidentifikatoren ist, der XCAP-Ressourcen, auf die von einer Anwendung zugegriffen wird, von XCAP-Ressourcen unterscheidet, auf die von einer anderen zugegriffen wird, wobei die Autorisierungsregeln (416, 508) die Zugriffsrechte auf zumindest ein anwenderspezifisches XML-Dokument bestimmen; und
Speichern der Autorisierungsregeln (416, 508) auf einem gemeinsamen Verwaltungsserver für XML-Dokumente (20, 400, 504) als ein oder mehrere XML-Dokumente, so dass auf die Autorisierungsregeln (416, 508) zugegriffen werden kann und/oder sie über das XML-Konfigurationszugriffsprotokoll, XCAP, modifiziert werden können.

2. Verfahren nach Anspruch 1, des Weiteren umfassend:
Empfangen einer Anforderung zum Zugriff auf ein anwenderspezifisches XML-Dokument;
Bestimmen, basierend auf dem eindeutigen Anwendungsidentifikator (404) und den Benutzerinformationen, ob der Zugriff auf das anwenderspezifische XML-Dokument gewährt werden kann; und
Bereitstellen einer Antwort auf die Anforderung.

3. Verfahren nach Anspruch 1, wobei das anwenderspezifische XML-Dokument eine Kontaktliste umfasst.

4. Computerprogramm zum Verwalten von Informationen in einer Verwaltungsarchitektur für XML-Dokumente (Extensible Markup Language), **dadurch gekennzeichnet, dass** das Computerprogramm Code umfasst, der dazu angepasst ist, die Verfahrensschritte nach einem der Ansprüche 1 bis 3 durchzuführen, wenn er auf einem Datenverarbeitungsgerät ausgeführt wird.

5. Computerprogramm nach Anspruch 4, wobei das Computerprogramm auf einem computerlesbaren Medium ausgeführt wird.

6. Gemeinsamer Verwaltungsserver für XML-Dokumente (Extensible Markup Language) in einer Verwaltungsarchitektur für XML-Dokumente, **dadurch gekennzeichnet, dass** der gemeinsame Verwaltungsserver für XML-Dokumente (20, 400, 504) umfasst:
mindestens einen Speicher (24), der dazu konfiguriert ist, Autorisierungsregeln (416, 508) zu speichern, welche die Zugriffsrechte auf zumindest ein anwenderspezifisches XML-Dokument bestimmen, wobei die Autorisierungsregeln (416, 508) durch einen eindeutigen Anwendungsidentifikator (404) identifiziert werden, der eindeutige Anwendungsidentifikator ein eindeutiger Identifikator in dem Namensraum von eindeutigen Anwendungsidentifikatoren ist, der XCAP-Ressourcen, auf die von einer Anwendung zugegriffen wird, von XCAP-Ressourcen unterscheidet, auf die von einer anderen zugegriffen wird, und als ein oder mehrere XML-Dokumente gespeichert sind; und
eine Verarbeitungseinheit (22), die dazu konfiguriert ist, den Zugriff auf und/oder die Modifikation der Autorisierungsregeln (416, 508) über das XML-Konfigurationszugriffsprotokoll, XCAP, zu ermöglichen.

7. Gemeinsames Netzwerkelement nach Anspruch 6, des Weiteren umfassend:
eine Empfangsschnittstelle (26), die zum Empfangen einer Anforderung zum Zugriff auf ein anwenderspezifisches XML-Dokument konfiguriert ist;
die Verarbeitungseinheit (22), die zum Bestimmen konfiguriert ist, basierend auf dem eindeutigen Anwendungsidentifikator (404) und den Benutzerinformationen, ob der Zugriff auf das anwenderspezifische XML-Dokument gewährt werden kann; und
eine Sendeschnittstelle (28), die zum Bereitstellen einer Antwort auf die Anforderung konfiguriert ist.

8. Gemeinsames Netzwerkelement nach Anspruch 6, wobei das mindestens eine anwenderspezifische XML-Dokument eine Kontaktliste umfasst.

## Revendications

1. Procédé de gestion de l'information dans une architecture de gestion de documents en langage de balisage extensible, XML, **caractérisé en ce qu'**il comprend :
la fourniture de règles d'autorisation (416, 508) avec un identificateur unique d'application (404), l'identificateur unique d'application étant un identificateur unique à l'intérieur de l'espace de nommage d'identificateurs uniques d'application qui différencie des ressources XCAP accessibles par une application par rapport à des ressources XCAP accessibles par une autre application, procédé dans lequel les règles d'autorisation (416, 508) déterminent les droits d'accès à au moins un document en langage de balisage extensible spécifique à l'utilisateur, et
la mémorisation des règles d'autorisation (416, 508) dans un serveur de gestion de documents en langage de balisage extensible partagé (20, 400, 504) comme un ou plusieurs documents en langage de balisage extensible de façon que les règles d'autorisation (416, 508) sont accessibles et/ou peuvent être modifiées via le protocole d'accès de configuration XCAP du langage de balisage extensible.

2. Procédé suivant la revendication 1, comprenant en outre :
la réception d'une demande d'accès à un document en langage de balisage extensible spécifique à l'utilisateur,
la détermination, sur la base de l'identificateur unique d'application (404) et des informations utilisateur, si un accès peut être accordé au document XML spécifique à l'utilisateur, et
la fourniture d'une réponse à la demande.

3. Procédé suivant la revendication 1, dans lequel le document en langage de balisage extensible spécifique à l'utilisateur comprend une liste de contacts.

4. Programme d'ordinateur pour la gestion de l'information dans une architecture de gestion de documents en langage de balisage extensible, XML, **caractérisé en ce que** le programme d'ordinateur comprend un code adapté à effectuer les étapes de procédé suivant une quelconque des revendications 1 à 3, lorsqu'il est exécuté sur un dispositif de traitement de données.

5. Programme d'ordinateur suivant la revendication 4, le programme d'ordinateur étant stocké dans un support lisible par ordinateur.

6. Serveur de gestion de documents en langage de balisage extensible XML partagé destiné à la gestion de l'information dans une architecture de gestion de documents en langage de balisage extensible, **caractérisé en ce que** le serveur de gestion de documents en langage de balisage extensible (20, 400, 504) comprend :
au moins une mémoire (24) configurée pour mémoriser des règles d'autorisation (416, 508) qui déterminent les droits d'accès à au moins un document en langage de balisage extensible spécifique à l'utilisateur, les règles d'autorisation (416, 508) étant identifiées par un identificateur unique d'application (404), l'identificateur unique d'application étant un identificateur unique à l'intérieur de l'espace de nommage d'identificateurs uniques d'application qui différencie des ressources XCAP accessibles par une application par rapport à des ressources XCAP accessibles par une autre application, et les règles d'autorisation (416, 508) étant mémorisées comme un ou plusieurs documents en langage de balisage extensible, et
une unité de traitement (22) configurée pour permettre l'accès aux règles d'autorisation (416, 508) et/ou la modification de celles-ci via le protocole d'accès de configuration XCAP du langage de balisage extensible.

7. Elément de réseau partagé suivant la revendication 6, comprenant en outre :
une interface de réception (26) configurée pour recevoir une demande d'accès à un document en langage de balisage extensible spécifique à l'utilisateur,
l'unité de traitement (22) configurée pour déterminer, sur la base de l'identificateur unique d'application (404) et des informations utilisateur, si un accès peut être accordé à un document en langage de balisage extensible spécifique à l'utilisateur, et
une interface de transmission (28) configurée pour fournir une réponse à la demande.

8. Elément de réseau partagé suivant la revendication 6, dans lequel l'au moins un document en langage de balisage extensible spécifique à l'utilisateur comprend une liste de contacts.
